# EUROPÄISCHE PATENTANMELDUNG

(11) **EP 1 398 606 A2**
(43) Veröffentlichungstag der Anmeldung: **17.03.2004**
(21) Anmeldenummer: 03020757.5
(22) Anmeldetag: 12.09.2003
(51) Int. Cl.: G01L 1/22, G01L 1/26, G01L 5/10

(54) **Kraftmessblock**

(30) Priorität: 12.09.2002 DE 10243043
(71) Anmelder: EBM Brosa Messgeräte GmbH & Co.KG, 88069 Tettnang (DE)
(72) Erfinder: Futterer, Bernd, 88214 Ravensburg (DE); Pfeffer, Otto, 88069 Tettnang (DE)
(74) Vertreter: Heuckeroth, Volker, Dr.

(57) **Zusammenfassung**

Vorgestellt wird ein einstückiger Meßblock (10; 100) zur Erfassung einer ersten Kraft (12), die längs einer ersten Raumrichtung (14) wirkt, mit ersten Teilbereichen (16), die sich längs der ersten Raumrichtung (14) erstrecken, und mit zweiten Teilbereichen (18a; 102, 104, 106, 108), die sich längs einer zweiten Raumrichtung (20) erstrecken, die einen Winkel (α) mit der ersten Raumrichtung (14) einschließt, wobei ein Paar erster Teilbereiche (16) mit einem Paar zweiter Teilbereiche (18a) eine rautenförmige Struktur bildet, die einen Meßbereich (22) umgibt, in dem wenigstens ein verformungsempfindliches Geberelement (24) angeordnet ist. Der vorgestellte Meßblock zeichnet sich durch wenigstens einen zusätzlichen zweiten Teilbereich (18b) aus, über den eine störende Querkraftkomponente an dem Meßbereich vorbei in eine Abstützung geleitet wird. Dadurch ergibt sich eine Entkopplung der störenden Querkraft von dem Meßbereich, was zu einer genaueren Erfassung der ersten Kraft beiträgt (Fig. 1).

## Beschreibung

Die Erfindung betrifft einen einstückigen Meßblock zur Erfassung einer ersten Kraft, die längs einer ersten Raumrichtung wirkt, mit ersten Teilbereichen, die sich längs der ersten Raumrichtung erstrecken, und mit zweiten Teilbereichen, die sich längs einer zweiten Raumrichtung erstrecken, die einen Winkel α mit der ersten Raumrichtung einschließt, wobei ein Paar erster Teilbereiche mit einem Paar zweiter Teilbereiche eine rautenförmige Struktur bildet, die einen Meßbereich umgibt, in dem wenigstens ein verformungsempfindliches Geberelement angeordnet ist.

Dabei stellen die ersten und die zweiten Teilbereiche gewissermaßen Zonen mit vergleichsweise großer Materialstärke dar, die an Zonen geringerer Materialstärke angrenzen. Die ersten Teilbereiche und die zweiten Teilbereiche bilden damit stegartige oder brückenartige Strukturen innerhalb des einstückigen Meßblocks. Da sich die ersten Teilbereiche längs einer ersten Raumrichtung erstrecken, lassen sich zwei erste Teilbereiche zu einem (ersten) Paar paralleler Teilbereiche zusammenfassen. Analog gilt dies für die zweiten Teilbereiche, die sich längs der zweiten Raumrichtung erstrecken und ein (zweites) Paar bilden. Beide Paare zusammmen bilden die rautenartige Struktur innerhalb des einstückigen Meßblockes.

Jeweils ein Teilbereich erster Raumrichtung geht innerhalb des einstückigen Meßblocks an einer Ecke der rautenartigen Struktur in einen Teilbereich zweiter Raumrichtung über. Die Ecken der rautenförmigen Struktur bilden damit gewissermaßen Materialgelenke, in denen sich die Winkelausrichtung der ersten und zweiten Teilbereiche bei Verformungen des Meßblocks relativ zueinander ändern kann.

Bekanntlich beruht das Prinzip von Meßblöcken dieser Art auf der Umwandlung einer am Meßblock angreifenden Kraft in eine definierte Meßblockverformung. Im einfachsten Fall besteht der Meßblock aus einem elastisch verformbaren Material, beispielsweise Metall, in der Form eines Quaders. Eine Seite des Quaders wird durch eine Abstützung unbeweglich fixiert. An der gegenüberliegenden Seite des Quaders greift die zu messende Kraft so an, daß in dem Quader Scherkräfte induziert werden. Aufgrund dieser Scherkräfte verformt sich der Quader parallelogrammartig. Mit anderen Worten: Projiziert man diese Verformung in eine Fläche, entspricht dies beispielsweise der Verformung eines Rechtecks (rechtwinkliges Parallelogramm) in ein Parallelogramm mit spitzen und stumpfen Winkeln.

Üblicherweise weist ein solcher Meßblock in seinem zentralen Bereich eine verringerte Materialstärke auf. Dadurch konzentriert sich gewissermaßen die Verformungswirkung auf diesen zentralen Bereich, während die stärkeren Randbereiche bei der Verformung nur unwesentliche Längenänderungen erfahren. Die den zentralen Bereich umgebenden Randbereiche bilden damit gewissermaßen eine rautenförmige Struktur.

Der sich stärker verformende zentrale. Bereich geringerer Materialstärke weist ein verformungsempfindliches Geberelement auf, das die mechanische Verformung in ein elektrisches Signal umwandelt. Diese Umwandlung kann beispielsweise, wie beim induktiven Meßprinzip oder bei Meßbügeln auf einer direkten Erfassung der Verformung beruhen. Als Alternative kann die Umwandlung auf einem Erfassen der relativen Verformungen (Dehnungen, Stauchungen) nach dem Dehnungsmeßstreifen-Prinzip oder nach dem piezoresistiven Prinzip beruhen. Als weitere Alternativen stehen das Erfassen spannungsbedingter Ladungsänderungen an Quarzkristallen beim piezoelektrischen Prinzip und/oder das Erfassen von spannungsbedingten Permeabilitätsänderungen beim magnetoelastischen Prinzip zur Verfügung.

Ein solcher Meßblock, der mit einer Schaltung aus Dehnungsmeßstreifen arbeitet, ist aus der US-A-5,336,854 bekannt. Der bekannte Meßblock zeigt eine rautenförmige Struktur mit einer inneren zentralen Meßbrücke, die Dehnungsmeßstreifen trägt. Die rautenförmige Struktur wird durch vier jeweils paarweise parallele Teilbereiche gebildet. Nach dieser Schrift ist der vorgestellte Meßblock zur Messung reiner Scherkräfte geeignet. Reine Scherkräfte zeichnen sich dadurch aus, daß sie in einer festen Raumrichtung außermittig an dem Meßblock angreifen, ohne daß dabei Querkraftkomponenten auftreten.

Es gibt jedoch technische Anwendungsfälle, in denen eine Kraft in Betrag und Richtung zeitlich variabel ist. Als Beispiel betrachte man eine Tuchbahn, die von einer Welle abgewickelt wird. Selbst bei exakter Führung des unter Zugkraft abgewickelten Tuches verändert sich der Radius der Tuchwelle mit der Menge des auf der Tuchwelle verbleibenden Tuches. Aufgrund der Änderung des Radius ändert sich im allgemeinen auch die Richtung der Zugkraft.

Vor diesem Hintergrund besteht die Aufgabe der Erfindung darin; eine in einer ersten Raumrichtung wirkende Kraft auch beim Auftreten von zeitlich variablen Querkraftkomponenten möglichst genau zu erfassen.

Diese Aufgabe wird bei einem Meßblock der eingangs genannten Art dadurch gelöst, daß der Meßblock wenigstens einen zusätzlichen zweiten Teilbereich aufweist, der sich längs der zweiten Raumrichtung erstreckt.

Durch den wenigstens einen zusätzlichen zweiten Teilbereich, ergibt sich die Möglichkeit, den Meßblock konstruktiv so auszulegen, daß die störende Querkraftkomponente wenigstens teilweise an dem eigentlichen Meßbereich vorbeigeleitet wird und über den zusätzlichen zweiten Teilbereich in eine Abstützung eingeleitet wird.

Dabei ist bevorzugt, daß der wenigstens eine zusätzliche zweite Teilbereich außerhalb des Meßbereichs angeordnet ist.

Diese Anordnung erlaubt vorteilhafterweise die genannte Entkopplung der Querkraftkomponente von dem Meßbereich.

Weiter ist bevorzugt, daß wenigstens zwei zusätzliche zweite Teilbereiche vorgesehen sind, von denen jeweils wenigstens einer auf jeder Seite einer parallel zur zweiten Raumrichtung durch den Meßbereich verlaufenden Linie angeordnet ist.

Dadurch wird vorteilhafterweise die störende Querkraftkomponente wenigstens teilweise auf beiden Seiten des Meßbereiches am Meßbereich vorbeigeleitet.

Es ist weiter bevorzugt, daß der Meßblock durch eine Stützstruktur sowohl gegen die erste Kraft; als auch gegen eine zweite Kraft (Querkraft), die in der zweiten Raumrichtung wirkt, abgestützt ist.

Dabei stellt die zweite Kraft gewissermaßen die störende Querkraftkomponente dar.

Vorteilhafterweise unterstützt die entsprechend ausgestaltete Stützstruktur die Entkopplung der störenden Querkraftkomponente von dem Meßbereich.

Es ist weiter bevorzugt, daß eine erste Abstützung des Meßblocks gegen die erste Kraft räumlich getrennt von einer zweiten Abstützung des Meßblocks gegen die zweite Kraft erfolgt.

Auch dieses Merkmal unterstützt vorteilhafterweise die Entkopplung der Wirkung der ersten Kraft und der Wirkung der zweiten Kraft auf den Meßbereich.

Es ist weiter bevorzugt, daß die zweite Abstützung in einem längs der ersten Raumrichtung vorgegebenen Abstand zum Meßbereich erfolgt.

Auch dieses Merkmal unterstützt durch die räumliche Trennung der Abstützungen vorteilhafterweise die genannten Entkopplungen.

Weiter ist bevorzugt, daß die zweite Abstützung beidseitig zum Meßbereich erfolgt.

Dieses Merkmal liefert den Vorteil einer weitergehenden Entkopplung des Meßbereichs von Querkrafteinflüssen, da die Querkräfte gewissermaßen auf beiden Seiten des Meßbereichs am Meßbereich vorbeigeleitet werden.

Es ist weiter bevorzugt, daß die erste Abstützung bei Einwirkung der zweiten Kraft elastische Auslenkungen des Meßbereichs längs der zweiten Raumrichtung erlaubt.

Damit ist der Vorteil verbunden, daß sich der Meßbereich bei Einwirkung von Rest-Querkraftkomponenten als Ganzes in Richtung der Querkraftkomponente bewegen kann, ohne sich dabei zu verformen. Mit anderen Worten: Durch die Möglichkeit, daß sich der Meßbereich als Ganzes bewegt, ruft die Querkraftkomponente keine Verformung des Meßbereichs hervor, die sich in einer Verfälschung des Meßsignals abbildet, das die Kraft in der ersten Raumrichtung liefert.

Es ist weiter bevorzugt, daß die zweite Abstützung durch eine Verschraubung des Meßblocks mit einer Stützstruktur erfolgt.

Eine Verschraubung hat u.a. den Vorteil, daß auch bei einer Vorzeichenumkehr der Richtung der störenden Querkraftkomponente eine Abstützung des Meßblocks in der zweiten Raumrichtung möglich ist.

Es ist weiter bevorzugt, daß die erste Abstützung in der ersten Raumrichtung näher an dem Meßbereich erfolgt als die zweite Abstützung.

Dadurch, daß die erste Abstützung näher an dem Meßbereich angeordnet ist als die zweite Abstützung, kann der Meßbereich wirksam gegen Kräfte in der ersten Raumrichtung abgestützt werden, wobei gleichzeitig störende Querkrafteinflüsse zumindest verringert werden.

Es ist weiter bevorzugt, daß die erste Abstützung durch eine erste Meßblock-Konturierung erfolgt, die formschlüssig in eine Stützstruktur-Konturierung eingreift, die die erste Meßblock-Konturierung in der ersten Raumrichtung fixiert.

Diese formschlüssig ineinandergreifenden Konturierungen können vorteilhafterweise so ausgestaltet sein, daß sich in der ersten Raumrichtung eine erwünschtermaßen steife Abstützung ergibt, ohne daß erwünschte Bewegungsfreiheitsgrade in der zweiten Raumrichtung beschränkt werden.

Es ist weiter bevorzugt, daß die erste Abstützung außerhalb einer abstandserhaltenden Projektion des Meßbereichs auf die Stützstruktur erfolgt.

Dadurch wird vorteilhafterweise der Meßbereich in der ersten Raumrichtung auf seiner vollen Breite abgestützt, was eine vollständige Ausnutzung des Meßbereichs zur Erfassung der ersten Kraft fördert.

Weiter ist bevorzugt, daß die erste Meßblock-Konturierung in der zweiten Raumrichtung gegen die Stützstruktur-Konturierung beweglich ist.

Durch diese Beweglichkeit ist es vorteilhafterweise möglich, daß der Meßbereich unter dem Einfluß einer störenden Querkraft als Ganzes in der zweiten Raumrichtung verschoben wird, ohne daß der Meßbereich dabei innerlich verformt wird. Dadurch werden unerwünschte Einflüsse der Querkraft auf die Messung der Kraft in der ersten Raumrichtung verringert.

Es ist weiter bevorzugt, daß die erste Kraft und die zweite Kraft Teilkomponenten einer Gesamtkraft sind, deren Betrag und Richtung zeitabhängig variabel ist.

Eine solche Konstellation stellt ein bevorzugtes Anwendungsbeispiel der Erfindung dar. Mit Hilfe der Erfindung gelingt es, die Wirkung der ersten Kraft auf den Meßbereich zu erfassen und dabei störende Einwirkungen der zweiten Kraft zumindest zu verringern. Dies ist beispielsweise bei dem eingangs genannten Beispiel der Tuchwelle von Vorteil, wenn man sich nur für die auf die Tuchwelle infolge der Zugkraft wirkende Biegekraft in einer Raumrichtung interessiert.

Es ist weiter bevorzugt, daß die Gesamtkraft durch eine formschlüssige Ankopplung auf den Meßblock übertragen wird.

Formschlüssige Ankopplungen besitzen allgemein den Vorteil konstruktiv einfacher und gleichzeitig steifer Ausführbarkeit und erlauben zusätzlich das Vorsehen von Bewegungsfreiheitsgraden in den Raumrichtungen, die senkrecht zur Richtung der zu messenden Kraft gerichtet sind.

Es ist weiter bevorzugt, daß die formschlüssige Ankopplung der Gesamtkraft auf der der ersten Abstützung gegenüberliegenden Seite des Meßblocks außerhalb einer abstandserhaltenden Projektion des Meßbereichs auf diese Seite des Meßblocks erfolgt.

Auch dieses Merkmal liefert den Vorteil einer möglichst vollständigen Ausnutzung des Meßbereichs zur Erfassung kraftinduzierter Verformungen.

Es ist weiter bevorzugt, daß die Ankopplung der gesamten Kraft mit Bezug auf eine längs der ersten Raumrichtung durch den Meßbereich verlaufenden Linie symmetrisch zu der ersten Abstützung erfolgt.

Auf diese weise ergibt sich vorteilhafterweise eine gleichmäßige Scherkraftverteilung zwischen der ersten angreifenden Kraft auf der einen Seite des Meßbereichs und der Abstützung gegen die erste angreifende Kraft auf der anderen, gegenüberliegenden Seite des Meßbereichs.

Es ist weiter bevorzugt, daß die Einwirkung der zweiten Kraft auf den Meßblock wenigstens teilweise durch den wenigstens einen zusätzlichen zweiten Teilbereich auf die zweite Abstützung übertragen wird.

Durch die Übertragung der Einwirkung der zweiten Kraft über wenigstens einen zweiten Teilbereich auf die zweite Abstützung wird erreicht, daß die zweite Kraft, d.h. die störende Querkraft, den Meßbereich möglichst wenig verformt und damit die Messung der ersten Kraft möglichst wenig beeinträchtigt.

Weiter ist bevorzugt, daß der Meßbereich einstückig mit seinen umgebenden ersten und zweiten Teilbereichen verbunden ist und eine im Vergleich zu diesen ersten und zweiten Teilbereichen verringerte Materialstärke aufweist.

Durch diese Merkmale wird die Verformung gewissermaßen in den Meßbereich konzentriert, was eine gute Verformbarkeit des Meßbereiches in Verbindung mit dauerelastisch haltbaren, stärkeren ersten und zweiten Teilbereichen ergibt.

Weiter ist bevorzugt, daß die ersten und zweiten Teilbereiche durch eine im Vergleich zu benachbarten Bereichen größere Materialstärke definiert sind.

Durch dieses Merkmal wird erreicht, daß der Meßblock ein definiertes Verformungsverhalten in Abhängigkeit von Betrag und Richtung der angreifenden Kraft aufweist. Dadurch, daß die ersten und zweiten Teilbereiche mit vergleichsweise großer Materialstärke ausgeführt sind, wird die Dauerhaltbarkeit des Meßblocks verbessert.

Es ist weiter bevorzugt, daß die Materialstärke der benachbarten Bereiche durch radial versetzte, sich überschneidende Sacklochbohrungen verringert ist.

Damit ist der Vorteil verbunden, daß definierte Restmaterialstärken konstruktiv und fertigungstechnisch einfach erzeugt werden können. Durch solche Restmaterialstärken kann in bestimmten Anwendungsfällen eine erwünschte Steifigkeit des Meßblocks erzielt werden.

Es ist weiter bevorzugt, daß jeweils zwei gegenüberliegende erste Teilbereiche nur durch zwei gegenüberliegende zweite Teilbereiche verbunden sind.

Diese Ausgestaltung besitzt den Vorteil, daß die Verformungsarbeit weitestgehend in den Meßbereich verlagert wird und daß die ersten und zweiten Teilbereiche lediglich Stützfunktionen übernehmen.

Es ist weiter bevorzugt, daß zwischen den ersten und zweiten Teilbereichen liegende benachbarte Bereiche durch radial versetzte, sich überschneidende und den Meßblock ganz durchdringende Bohrungen definiert sind.

Diese Ausgestaltung zeichnet sich durch eine besonders einfache Fertigung aus.

Es ist weiter bevorzugt, daß der Meßbereich des Meßblocks durch wenigstens einen Deckel abgedichtet ist.

Damit ist der Vorteil verbunden, daß Verunreinigungen oder Feuchtigkeitseinflüsse, die die Funktion des verformungsempfindlichen Geberelementes beeinträchtigen könnten, weitestgehend vom Meßbereich ferngehalten werden.

Weitere Vorteile ergeben sich aus der Beschreibung und den beigefügten Figuren.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Gesamtansicht eines Ausführungsbeispiels eines Meßblocks in perspektivischer Darstellung;
- Fig. 2: eine Seitenansicht des Meßblocks zusammen mit einer Stützstruktur und einer formschlüssigen Kopplung von Kräften an den Meßblock;
- Fig. 3: eine Seitenansicht eines weiteren Ausführungsbeispiels zusammen mit Teilen einer korrespondierenden Stützeinrichtung;
- Fig. 4: einen Schnitt längs der Linie IV-IV in der Darstellung der Fig. 3.

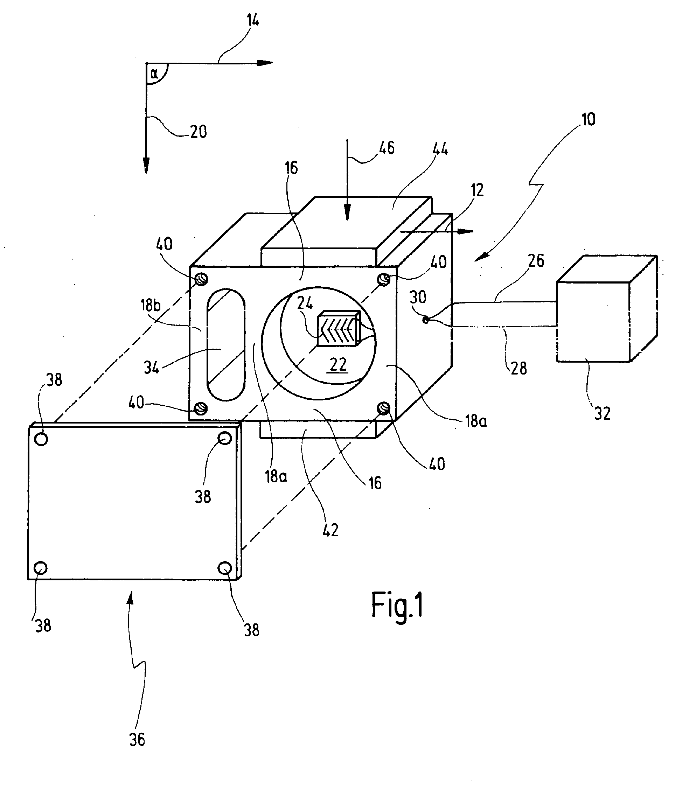

In der Fig. 1 bezeichnet die Ziffer 10 eine Gesamtansicht eines Meßblocks in perspektivischer Darstellung. Der gezeigte Meßblock dient zur Erfassung einer ersten Kraft 12, die in einer ersten Raumrichtung 14 an dem Meßblock angreift. Der Meßblock weist erste Teilbereiche 16 auf, die sich längs der ersten Raumrichtung erstrecken, und weist weiter zweite Teilbereiche 18a auf, die sich längs einer zweiten Raumrichtung 20 erstrecken. Die zweite Raumrichtung 20 bildet mit der ersten Raumrichtung 14 einen Winkel α. In der Darstellung der Fig. 1 ist α = 90°. Die Erfindung beschränkt sich aber nicht auf eine Anwendung mit einem Winkel α = 90°, sondern kann mit entsprechenden konstruktiven Abwandlungen auch für andere Winkel eingesetzt werden.

Das Paar erster Teilbereiche 16 bildet mit dem Paar zweiter Teilbereiche 18a eine rautenförmige Struktur. Im Zentrum dieser rautenförmigen Struktur ist ein Meßbereich 22 angeordnet, in dem wenigstens ein verformungsempfindliches Geberelement 24 angebracht ist.

Der Meßblock ist einstückig ausgeführt, wobei der Meßbereich 22 eine gegenüber den Materialstärken der Teilbereiche 16, 18a verringerte Materialstärke aufweist. Die rautenförmige Struktur ergibt sich dadurch, daß man sich um den Meßbereich 22, der in der Darstellung der Fig. 1 eine kreisförmige Kontur besitzt, ein Quadrat vorstellt, dessen Seiten jeweils in den Teilbereichen 16 und 18a liegen.

Mit anderen Worten: Die ersten und die zweiten Teilbereiche sind als Zonen mit vergleichsweise großer Materialstärke reallisiert, die an Zonen geringerer Materialstärke, beispielsweise den Meßbereich, angrenzen. Die ersten Teilbereiche und die zweiten Teilbereiche bilden damit stegartige oder brückenartige Strukturen innerhalb des einstückigen Meßblocks. Da sich die ersten Teilbereiche längs einer ersten Raumrichtung erstrecken, bilden zwei erste Teilbereiche ein (erstes) Paar paralleler Teilbereiche. Analog bilden zwei zweite Teilbereiche, die sich längs der zweiten Raumrichtung erstrecken, ein (zweites) Paar. Beide Paare zusammmen bilden die rautenartige Struktur innerhalb des einstückigen Meßblockes.

Wie eingangs erwähnt, geht jeweils ein Teilbereich erster Raumrichtung innerhalb des einstückigen Meßblocks an einer Ecke der rautenartigen Struktur in einen Teilbereich zweiter Raumrichtung über. Die Ecken der rautenförmigen Struktur bilden damit Materialgelenke, in denen sich die Winkelausrichtung der ersten und zweiten Teilbereiche bei Verformungen des Meßblocks relativ zueinander ändern kann.

Erfindungsgemäß weist der Meßblock wenigstens einen zweiten zusätzlichen Teilbereich 18b auf, der außerhalb des Meßbereiches angeordnet ist und der sich längs der zweiten Raumrichtung erstreckt. In der Darstellung der Fig. 1 ist der zweite zusätzliche Teilbereich 18b von einem ersten Teilbereich 18a durch einen Bereich 34 getrennt, der eine verringerte Materialstärke aufweist. Die Materialstärke des Bereichs 34 kann auch gleich Null sein.

Das verformungsempfindliche Geberelement 24 ist über Signalleitungen 26, 28 mit einem Gerät 32 verbunden, das beispielsweise Treiberschaltungen, sowie Schaltungen zur Signalaufbereitung und Signalauswertung enthält. Die Leitungen 26, 28 können beispielsweise durch eine Bohrung 30 aus dem Meßblock 10 heraus geführt werden.

Um das verformungsempfindliche Geberelement 24 vor äußeren Einflüssen wie Verunreinigungen oder Feuchtigkeit zu schützen, kann der Meßblock 10 seitlich durch einen Deckel 36 verschlossen werden. Dazu weist der Deckel 36 Bohrungen 38 auf, die beim Aufsetzen des Deckels auf den Meßblock 10 axial mit Gewindebohrungen 40 im Meßblock 10 übereinstimmen. Mit Hilfe nicht dargestellter Schrauben kann somit der Deckel 36 dicht mit dem Meßblock 10 verschraubt werden.

Der Meßblock 10 weist an einer Seite eine erste Konturierung 42 auf, die in eine entsprechend negativ ausgebildete Konturierung einer in der Fig. 1 nicht dargestellten Stützstruktur eingreift. Auf der gegenüberliegenden Seite weist der Meßblock 10 eine zweite Konturierung 44 auf, über die die erste Kraft 12 in der ersten Raumrichtung 14 an dem Meßblock angreift.

Zusätzlich zu der ersten Kraft kann der Meßblock auch störenden Querkrafteinflüssen ausgesetzt sein. Diese sind in der Fig. 1 als zweite Kraft 46 dargestellt, die in der zweiten Raumrichtung 20 wirkt.

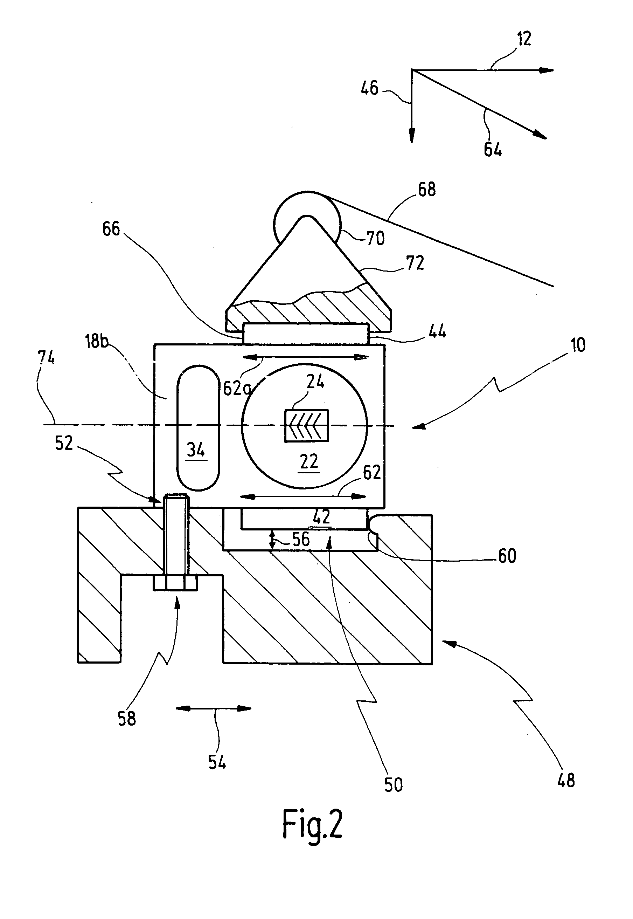

Die Funktion des Ausführungsbeispiels nach der Fig. 1 wird im folgenden mit Bezug auf die Fig. 2 erläutert.

Fig. 2 zeigt den Meßblock 10 aus der Fig. 1 in einer Seitenansicht zusammen mit einer Stützstruktur 48 und einer Vorrichtung 72, über die Kräfte an dem Meßblock 10 angreifen. Im dargestellten Ausführungsbeispiel sind dies eine erste Kraft 12, die in der ersten Raumrichtung 14 wirkt, und eine zweite Kraft 46, die in der zweiten Raumrichtung 20 wirkt.

Beide Kräfte 12, 46 stellen Teilkomponenten einer nach Betrag und Richtung variablen Gesamtkraft 64 dar. Im gezeigten Ausführungsbeispiel entspricht die Gesamtkraft 64 der Zugkraft eines Tuches 68, das von einer Rolle oder Walze 70 abgewickelt wird. Dadurch übt die Gesamtkraft 64 Biegekräfte auf die Walze 70 aus. Losgelöst von diesem detaillierten Ausführungsbeispiel soll für das Verständnis der Erfindung angenommen werden, daß von dieser Gesamtkraft 64 nur die Kraftkomponente 12 in der ersten Raumrichtung 14 meßtechnisch erfaßt werden soll. Dazu wird zunächst die Gesamtkraft 64 über das Tuch 68, die Rolle oder Walze 70 und die Lagerung oder Halterung der Walze 72 auf die zweite Meßblock-Konturierung 44 formschlüssig übertragen.

Für diese Funktion ist die Halterung 72 entsprechend negativ zur zweiten Meßblock-Konturierung 44 konturiert. Abweichend vom dargestellten Ausführungsbeispiel kann die Konturierung natürlich auch anders ausgeführt sein, beispielsweise kann der Meßblock 10 eine Nut aufweisen, in die ein entsprechend passender Vorsprung der Lagerung 72 eingreift. Wesentlich ist in diesem Zusammenhang nur, daß sowohl eine zu messende Kraft 12 in einer ersten Raumrichtung als auch störende Querkraftkomponenten 46 über die bevorzugt formschlüssig ausgeführte Ankopplung 66 auf den Meßblock übertragen werden.

Eine formschlüssige Ankopplung ist an dieser Stelle nicht zwingend erforderlich. Alternativ dazu kann auch eine Ankopplung durch geschweißte und/oder geschraubte Verbindungen erfolgen.

Der Meßblock weist auf der Seite, die der Ankopplung der angreifenden Kräfte gegenüberliegt, eine erste Konturierung 42 auf, die in eine entsprechend negativ konturierte Stützstruktur 48 eingreift. Dazu weist die Stützstruktur 48 eine Stützstruktur-Konturierung 60 auf. Die erste Meßblock-Konturierung 42 stellt damit in Verbindung mit der Stützstruktur-Konturierung 60 ein Ausführungsbeispiel einer ersten Abstützung 50 dar, mit der der Meßblock 10 gegen die Wirkung der Kraft 12 in der ersten Raumrichtung abgestützt ist.

Zusätzlich weist der Meßblock 10 eine zweite Abstützung 52 auf, über die die zweite Kraft, d.h. die störende Kraftkomponente 46 in die Stützstruktur 48 übertragen wird. Im dargestellten Ausführungsbeispiel ist die zweite Abstützung 52 als Verschraubung 58 ausgeführt. Die zweite Abstützung 52 erfolgt räumlich getrennt von der ersten Abstützung 50 und weist einen Abstand 54 zum Meßbereich 22 auf.

Die erste Abstützung 50 erlaubt elastische Auslenkungen 56 des Meßblocks in der zweiten Raumrichtung.

Im folgenden wird zunächst das Verhalten des vorgestellten Meßblocks 10 beim Auftreten von störenden Querkraftkomponenten, d.h. bei Kräften 46 in der zweiten Raumrichtung 20, betrachtet. Diese Kräfte werden gewissermaßen senkrecht von oben durch die Lagerung/Halterung 72 auf die zweite Meßblock-Konturierung 44 und damit auf den Meßblock 10 übertragen.

Durch den Abstand 54 der zweiten Abstützung 52 von dem Meßbereich 22 ergibt sich, da die zweite Kraft 46 oberhalb des Meßbereichs 22 angreift, ein Kraftverlauf im Meßblock 10, der den Meßblock 10 gewissermaßen im Uhrzeigersinn zu drehen versucht. Das damit verbundene Drehmoment wirkt in der Verschraubung 58 der zweiten Abstützung 52 als Zugkraft und wird dort als Zugkraft in die Stützstruktur 48 eingeleitet. Dabei ist wesentlich, daß die Einleitung der zweiten Kraft 46 in die Stützstruktur 48 zu einem wesentlichen Teil über den zweiten zusätzlichen Teilbereich 18b sowie über seinen benachbarten zweiten Teilbereich 18a erfolgt. Damit wird vorteilhafterweise vermieden, daß die störende Querkraftkomponente (zweite Kraft 46) über den Meßbereich 22 in die Stützstruktur 48 übertragen wird.

Der Meßbereich 22 ist vielmehr gegenüber Wirkungen der zweiten Kraft 46 in der ersten Abstützung beweglich geführt, so daß elastische Auslenkungen 56 des Meßbereichs 22 möglich sind.

Selbstverständlich muß unterhalb der ersten Meßblock-Konturierung 42 ein gewisser Freiraum vorhanden sein, um diese elastischen Auslenkungen 56 nicht zu behindern.

Bei Einwirkungen einer ersten Kraftkomponente 12 in einer ersten Raumrichtung 14 verhält sich der Meßblock 10 dagegen anders. Die Kraft 12 greift in der Darstellung der Fig. 2 am linken Ende der zweiten Meßblock-Konturierung 44 an. Die zweite Meßblock-Konturierung 44 ist vorteilhafterweise außerhalb einer Projektion des Meßbereichs auf die Oberseite des Meßblocks 10, d.h. einer Projektion auf die erste Raumrichtung, angeordnet.

Auf der gegenüberliegenden unteren Seite ist die erste Meßblock-Konturierung 42 entsprechend außerhalb einer Projektion des Meßbereichs 22 auf die Unterseite des Meßblocks 10, d.h. ebenfalls auf die erste Raumrichtung, angeordnet.

Insgesamt wird dadurch die oben links angreifende Kraft 12 unten rechts von der ersten Meßblock-Konturierung 42 auf die Stützstruktur-Konturierung 60 übertragen. Aufgrund dieser Anordnung treten im Meßbereich 22 Scherkräfte auf, die das verformungsempfindliche Geberelement 24 verformen und ein Abbild der Verformung in dem elektrischen Signal des verformungsempfindlichen Geberelementes 24 erzeugen.

Dadurch, daß die erste Meßblock-Konturierung 42 und die zweite Meßblock-Konturierung 44 symmetrisch zu einer Linie 74 angeordnet sind, die längs der ersten Raumrichtung 14 durch den Meßbereich verläuft, ergibt sich eine gleichmäßige Scherkraftverteilung im Meßbereich 22.

Kurz zusammengefaßt ergibt sich damit folgende Funktion: Die in der ersten Raumrichtung 14 wirkende erste Kraft 12 wird als Scherkraft vollständig durch den Meßbereich 22 auf die Stützstruktur übertragen und bildet sich wunschgemäß im elektrischen Ausgangssignal des verformungsempfindlichen Geberelementes 24 ab.

Andererseits wird die störende Querkraftkomponente 46 (zweite Kraft) weitestgehend an dem Meßbereich 22 vorbei und unter Beteiligung des zusätzlichen zweiten Teilbereichs 18b in die Stützstruktur übertragen. Auf diese Weise beeinflußt die störende Querkraftkomponente 46 die Verformung des Meßbereichs 22 nicht.

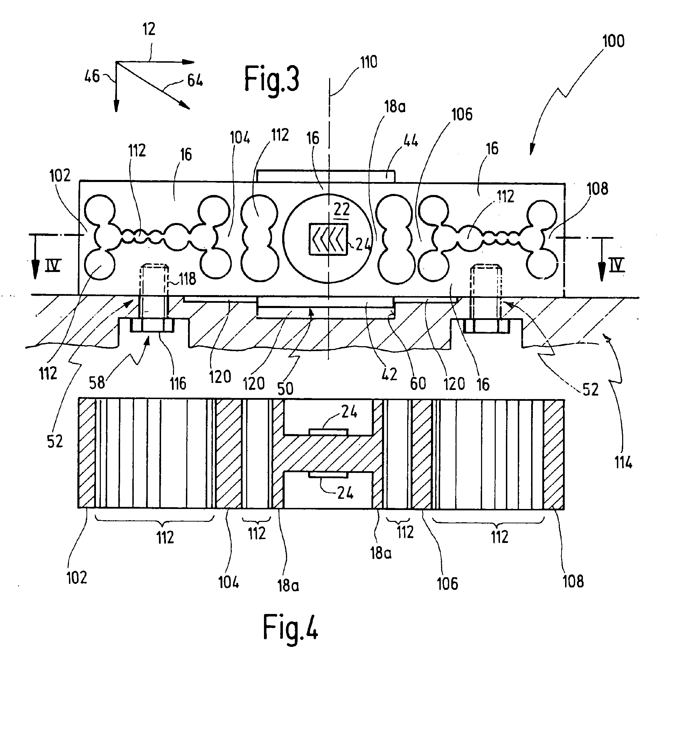

Das Ausführungsbeispiel eines Meßblocks 100 gemäß der Fig. 3 zeichnet sich dadurch aus, daß wenigstens zwei zusätzliche zweite Teilbereiche 102, 104, 106, 108 vorgesehen sind, von denen wenigstens einer auf jeder Seite einer parallel zur zweiten Raumrichtung 20 durch den Meßbereich 22 verlaufenden Linie 110 angeordnet sind. Auch bei diesem Ausführungsbeispiel werden erste Kräfte 12 und zweite Kräfte 46 über eine zweite Meßblock-Konturierung 44 oben mittig auf den Meßblock 100 übertragen.

Zur Abstützung des Meßblocks 100 in der ersten Raumrichtung ist auch hier eine erste Meßblock-Konturierung 42 vorgesehen, die in eine entsprechend negativ konturierte Stützstruktur-Konturierung 60 einer ausschnittsweise im Teilschnitt dargestellten Stützstruktur 114 eingreift. Die Stützstruktur 114 ist über zweite Abstützungen 52, die auch hier als Verschraubungen 58 ausgeführt, sind, mit dem Meßblock 100 verbunden. Jeweils eine Verschraubung 58 weist eine Schraube 116 auf, die in eine korrespondierende Gewindebohrung 118 im Meßblock 100 eingedreht ist. Die Abstützungen 52 erfolgen beidseitig der Linie 110 in einem gewissen Abstand vom Meßbereich 22 und damit vom Ort der Krafteinleitung und damit weiterhin vom Ort der ersten Abstützung 50.

Die Stützstruktur 114 weist zwischen den zweiten Abstützungen 52 Aussparungen 120 auf, die eine elastische Auslenkung des Mittelteils des Meßblocks 100 mit dem Meßbereich 22 in der ersten Raumrichtung ermöglichen.

Damit ist der Meßbereich 22 mit dem Mittelteil des Meßblocks 100 auch in diesem Ausführungsbeispiel in der zweiten Raumrichtung 20 elastisch nachgiebig beweglich. Als Folge werden Wirkungen der störenden Querkraftkomponente 46 auch bei diesem Ausführungsbeispiel über die zusätzlichen zweiten Teilbereiche 102, 104, 106 und 108 und die zweiten Abstützungen 52 auf die Stützstruktur 114 übertragen.

Dagegen werden Wirkungen der ersten Kraft 12 in der ersten Raumrichtung 14 über die Meßblock-Konturierungen 44 und 42 sowie über den dazwischenliegenden Meßbereich 22 in die Stützstruktur-Konturierung 60 der Stützstruktur 114 übertragen.

Die einzelnen Bereiche 102, 104, 18a, 106, 108, 16 können fertigungstechnisch in einfacher Weise dadurch erzeugt werden, daß der einstückige Meßblock 100 labyrinth-artig durch radial versetzte, sich überschneidende und den Meßblock ganz durchdringende Bohrungen definiert werden.

Fig. 4 zeigt einen Schnitt längs der Linie IV-IV durch den Meßblock 100 der Fig. 3. Gut zu erkennen ist, daß der Meßbereich 22, der verformungsempfindliche Geberelemente 24 trägt, als Bereich verringerter Materialstärke ausgeführt ist. Dabei bezieht sich die Verringerung der Materialstärke auf die Stärke der Teilbereiche 102, 104, 18a, 106, 108 und 16, von denen die zweiten Teilbereiche 102, 104, 18a, 18a, 106 und 108 im Schnitt zu erkennen sind. Die dazwischenliegenden Bereiche entsprechen einer Draufsicht auf den unteren ersten Teilbereich 16a.

Die in dieser Draufsicht erkennbaren Linien entsprechen den Kanten, mit denen einzelne Bohrungen 112 aus der Fig. 3 aufeinanderstoßen, bzw. sich durchdringen.

Alternativ zu Bohrungen 112, die den Meßblock 100 ganz durchdringen, können auch Sacklochbohrungen von beiden Seiten des Meßblocks 100 verwendet werden. Bevorzugt ist jedoch das Ausführungsbeispiel, bei denen jeweils zwei gegenüberliegende zwei Teilbereiche 18b, 18a; 102, 104; 104, 18a; 18a, 106; 106, 108 nur durch zwei gegenüberliegende erste Teilbereiche 16 miteinander verbunden sind.

In diesem Fall wirken die Verbindungen der Teilbereiche untereinander gewissermaßen als flexible Materialgelenke, die eine parallelogrammartige Verformung des Meßblocks unter dem Einfluß von Scherkräften ermöglichen.

## Patentansprüche

1. Einstückiger Meßblock (10; 100) zur Erfassung einer ersten Kraft (12), die längs einer ersten Raumrichtung (14) wirkt, mit ersten Teilbereichen (16), die sich längs der ersten Raumrichtung (14) erstrecken, und mit zweiten Teilbereichen (18a; 102, 104, 106, 108), die sich längs einer zweiten Raumrichtung (20) erstrecken, die einen Winkel (α) mit der ersten Raumrichtung (14) einschließt, wobei ein Paar erster Teilbereiche (16) mit einem Paar zweiter Teilbereiche (18a) eine rautenförmige Struktur bildet, die einen Meßbereich (22) umgibt, in dem wenigstens ein verformungsempfindliches Geberelement (24) angeordnet ist, **gekennzeichnet durch** wenigstens einen zusätzlichen zweiten Teilbereich (18b), der sich längs der zweiten Raumrichtung erstreckt.

2. Meßblock (10; 100) nach Anspruch 1, **dadurch gekennzeichnet, daß** der wenigstens eine zusätzliche zweite Teilbereich (18b; 102, 104, 106, 108) außerhalb des Meßbereichs (22) angeordnet ist.

3. Meßblock (10; 100) nach Anspruch 2, **gekennzeichnet durch** wenigstens zwei zusätzliche zweite Teilbereiche (102, 104, 106, 108), von denen jeweils wenigstens einer auf jeder Seite einer parallel zur zweiten Raumrichtung (20) **durch** den Meßbereich (22) verlaufenden Linie (110) angeordnet ist.

4. Meßblock (10; 100) nach wenigstens einem der Ansprüche 1 bis 3, **dadurch gekennzeichnet, daß** der Meßblock (10; 100) durch eine Stützstruktur (48; 114) sowohl gegen die erste Kraft (12), als auch gegen eine zweite Kraft (46), die in der zweiten Raumrichtung (20) wirkt, abgestützt ist.

5. Meßblock (10; 100) nach Anspruch 4, **dadurch gekennzeichnet, daß** eine erste Abstützung (50) des Meßblocks (10; 100) gegen die erste Kraft (12) räumlich getrennt von einer zweiten Abstützung (52) des Meßblocks (10; 100) gegen die zweite Kraft (46) erfolgt.

6. Meßblock (10; 100) nach Anspruch 5, **dadurch gekennzeichnet, daß** die zweite Abstützung (52) in einem längs der ersten Raumrichtung (14) vorgegebenen Abstand (54) zum Meßbereich (22) erfolgt.

7. Meßblock (10; 100) nach Anspruch 6, **dadurch gekennzeichnet, daß** die zweite Abstützung (52) beidseitig zum Meßbereich (22) erfolgt.

8. Meßblock (10; 100) nach wenigstens einem der Ansprüche 5 bis 7, **dadurch gekennzeichnet, daß** die erste Abstützung (52) bei Einwirkung der zweiten Kraft (46) elastische Auslenkungen (56) des Meßbereichs (22) längs der zweiten Raumrichtung (20) erlaubt.

9. Meßblock (10; 100) nach wenigstens einem der Ansprüche 5 bis 8, **dadurch gekennzeichnet, daß** die zweite Abstützung (52) durch eine Verschraubung (58) des Meßblocks (10; 100) mit einer Stützstruktur (48; 114) erfolgt.

10. Meßblock (10; 100) nach wenigstens einem der Ansprüche 5 bis 9, **dadurch gekennzeichnet, daß** die erste Abstützung (50) in der ersten Raumrichtung (14) näher an dem Meßbereich (22) erfolgt als die zweite Abstützung (52).

11. Meßblock (10; 100) nach wenigstens einem der Ansprüche 5 bis 10, **dadurch gekennzeichnet, daß** die erste Abstützung (50) durch eine erste Meßblock-Konturierung (42) erfolgt, die formschlüssig in eine Stützstruktur-Konturierung (60) eingreift, die die erste Meßblock-Konturierung (42) in der ersten Raumrichtung (14) fixiert.

12. Meßlock (10; 100) nach Anspruch 11, **dadurch gekennzeichnet, daß** die erste Abstützung (50) außerhalb ein er abstandserhaltenden Projektion (62) des Meßbereichs (22) auf die Stützstruktur (48; 114) erfolgt.

13. Meßblock (10; 100) nach wenigstens einem der Ansprüche 11 oder 12, **dadurch gekennzeichnet, daß** die erste Meßblock-Konturierung (42) in der zweiten Raumrichtung (20) gegen die Stützstruktur-Konturierung (60) beweglich ist.

14. Meßblock (10; 100) nach wenigstens einem der Ansprüche 4 bis 13, **dadurch gekennzeichnet, daß** die erste Kraft (12) und die zweite Kraft (46) Teilkomponenten einer Gesamtkraft (64) sind, deren Betrag und Richtung zeitabhängig variabel ist.

15. Meßblock (10; 100) nach Anspruch 14, **dadurch gekennzeichnet, daß** die Gesamtkraft (64) durch eine formschlüssige Ankopplung (66) auf den Meßblock (10; 100) übertragen wird.

16. Meßblock (10; 100) nach Anspruch 15, **dadurch gekennzeichnet, daß** die formschlüssige Ankopplung (66) der Gesamtkraft (64) auf der der ersten Abstützung (50) gegenüberliegenden Seite des Meßblocks (10; 100) außerhalb einer abstandserhaltenden Projektion (62a) des Meßbereichs auf diese Seite des Meßblocks (10; 100) erfolgt.

17. Meßblock (10; 100) nach wenigstens einem der Ansprüche 15 oder 16, **dadurch gekennzeichnet, daß** die Ankopplung (66) der Gesamtkraft (64) mit Bezug auf eine längs der ersten Raumrichtung (14) durch den Meßbereich (22) verlaufende Linie (74) symmetrisch zur ersten Abstützung (50) erfolgt.

18. Meßblock (10; 100) nach wenigstens einem der Ansprüche 4 bis 17, **dadurch gekennzeichnet, daß** die Einwirkung der zweiten Kraft (46) auf den Meßblock (10; 100) wenigstens teilweise durch den wenigstens einen zusätzlichen zweiten Teilbereich (18b; 102, 104, 106, 108) auf die zweite Abstützung (52) übertragen wird.

19. Meßblock (10; 100) nach wenigstens einem der Ansprüche 1 bis 18, **dadurch gekennzeichnet, daß** der Meßbereich (22) einstückig mit seinen umgebenden ersten Teilbereichen (16) und zweiten Teilbereichen (18a) verbunden ist und eine im Vergleich zu diesen ersten Teilbereichen (16) und zweiten Teilbereichen (18a) verringerte Materialstärke aufweist.

20. Meßblock (10; 100) nach wenigstens einem der Ansprüche 1 bis 19, **dadurch gekennzeichnet, daß** die ersten Teilbereiche (16) und die zweiten Teilbereiche (18b; 102, 104, 106, 108) durch eine im Vergleich zu benachbarten Bereichen (34) größere Materialstärke definiert sind.

21. Meßblock (10; 100) nach Anspruch 20, **dadurch gekennzeichnet, daß** die Materialstärke der benachbarten Bereiche (34) durch radial versetzte, sich überschneidende Sacklochbohrungen verringert ist.

22. Meßblock (10; 100) nach wenigstens einem der Ansprüche 1 bis 19, **dadurch gekennzeichnet, daß** jeweils zwei gegenüberliegende erste Teilbereiche (16) nur durch zwei gegenüberliegende zweite Teilbereiche (18a, 18b; 102, 104, 106, 108) verbunden sind.

23. Meßblock (10; 100) nach wenigstens einem der Ansprüche 1 bis 19; 22, **dadurch gekennzeichnet, daß** jeweils zwei gegenüberliegende zweite Teilbereiche (18b, 18a; 102, 104; 104, 18a; 18a, 106; 106, 108) nur durch zwei gegenüberliegende erste Teilbereiche (16) miteinander verbunden sind.

24. Meßblock (10; 100) nach wenigstens einem der Ansprüche 22 oder 23, **dadurch gekennzeichnet, daß** zwischen den ersten Teilbereichen (16) und zweiten Teilbereichen (18b; 102, 104, 106, 108) liegende benachbarte Bereiche (34) durch radial versetzte, sich überschneidende und den Meßblock ganz durchdringende Bohrungen (112) definiert sind.

25. Meßblock (10; 100) nach wenigstens einem der vorhergehenden Ansprüche, **dadurch gekennzeichnet, daß** der Meßbereich (22) des Meßblocks (10; 100) durch wenigstens einen Deckel (36) abgedichtet ist.
